# EUROPEAN PATENT APPLICATION

(11) **EP 3 518 262 A1**
(43) Date of publication of application: **31.07.2019**
(21) Application number: 18153453.8
(22) Date of filing: 25.01.2018
(51) Int. Cl.: H01H 3/02, H01H 71/12, H01H 9/22, A47B 81/06, F16P 7/02, G06F 1/16

(54) **DISPLAY DEVICE AND COMBINATION OF DISPLAY DEVICE, MOUNT AND CONNECTOR**

(71) Applicant: Vestel Elektronik Sanayi ve Ticaret A.S., 45030 Manisa (TR)
(72) Inventor: DEMIR, Murat, 45030 Manisa (TR); KAHRAMANOGLU, Gürmen, 45030 Manisa (TR)
(74) Representative: Roberts, David

(57) **Abstract**

There is disclosed a display device (100) comprising a mains power connection (126). The display device (100) also comprises a power circuit (134) comprising a circuit breaker arrangement (136). The circuit breaker arrangement (136) is constructed and arranged for connection to a mount (106) for holding the display device.

## Description

### Technical Field

The present disclosure relates to a display device, and a combination of a display device, a mount for the display device and a connector for connecting the display device to the mount.

### Background

Display devices such as televisions (TVs) and monitors are often placed on a mount, such as a wall-mount or a stand. There is a possibility that the display device may fall from the mount, particularly if it has been mounted incorrectly. This problem has been exacerbated by increasing size and weight of display devices, including those used in a domestic setting. Not only does this present a potential danger in terms of the weight of a falling display device (which could for example strike a small child), there is also a danger of an electrical malfunction such as arcing or leakage of electricity, which could ultimately cause fire and/or death.

### Summary

According to a first aspect disclosed herein, there is provided a display device comprising: a mains power connection; a power circuit comprising a circuit breaker arrangement, the circuit breaker arrangement constructed and arranged for connection to a mount for holding the display device.

According to an example, the display device comprises an interface constructed and arranged to receive a connector for connecting the circuit breaker arrangement to the mount.

According to an example, the circuit breaker arrangement is constructed and arranged so that the connector forms a part of the power circuit.

According to an example, the circuit breaker arrangement comprises a switch biased to an open position, wherein receiving the connector moves the switch to a closed position so as to complete the power circuit.

According to an example, the interface is spaced from the mains power connection.

According to an example, the display device comprises a television.

According to a second aspect disclosed herein, there is provided, in combination: a display device; a mount on which the display device is mounted; the display device comprising a mains power connection and a power circuit comprising a circuit breaker arrangement, the circuit breaker arrangement connected to the mount by a connector.

According to an example, the display device comprises an interface constructed and arranged to receive the connector, the interface being spaced from the mains power connection.

According to an example, the combination is constructed and arranged so that a force required to disconnect the connector from the interface is less than a force required to disconnect the connector from the mount.

According to an example, the circuit breaker arrangement is constructed and arranged so that the connector forms a part of the power circuit.

According to an example, the circuit breaker arrangement comprises a switch biased to an open position, wherein receiving the connector in the interface moves the switch to a closed position so as to complete the power circuit.

According to an example, the connector is flexible.

According to an example, the connector is inextendible.

According to an example, the mount comprises an attachment feature for attaching to the connector, the attachment feature comprising a hook or a ring.

According to an example, the mount comprises a wall mount or a stand.

### Brief Description of the Drawings

To assist understanding of the present disclosure and to show how embodiments may be put into effect, reference is made by way of example to the accompanying drawings in which:
Figure 1 shows schematically a mounted display device according to an example;
Figure 2 shows schematically a mounted display device according to an example;
Figure 3 shows schematically a display device which has become detached from its mount, according to an example.

### Detailed Description

Some problems associated with incorrectly or poorly mounted (and possibly falling) display devices have been explained above. In examples described in more detail below, if a display device becomes detached from its mount (which may be partial or full detachment from the mount), then a circuit breaker arrangement in the display device is actuated or activated so as to break a power circuit and electrically cut-off the display device.

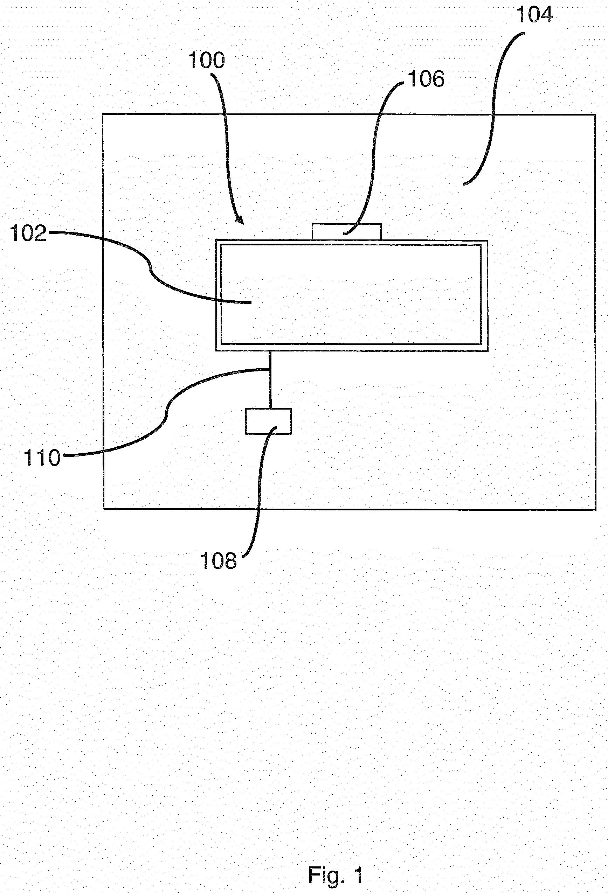

Figure 1 schematically shows a display device 100. The display device 100 comprises a display screen 102. The display device may in some examples be a television. In other examples the display device may be a monitor or a tablet or the like. In this example the display device 100 is attached to a wall or vertical surface 104 via a mount 106. Therefore in this example the mount 106 may be considered a wall-mount. In other examples the mount may not be wall-mounted, for example the mount 106 could comprise a stand or the like. The display device 100 is connected to a mains electrical socket 108 via a power lead 110 comprising a cable or wire, for powering the display device 100.

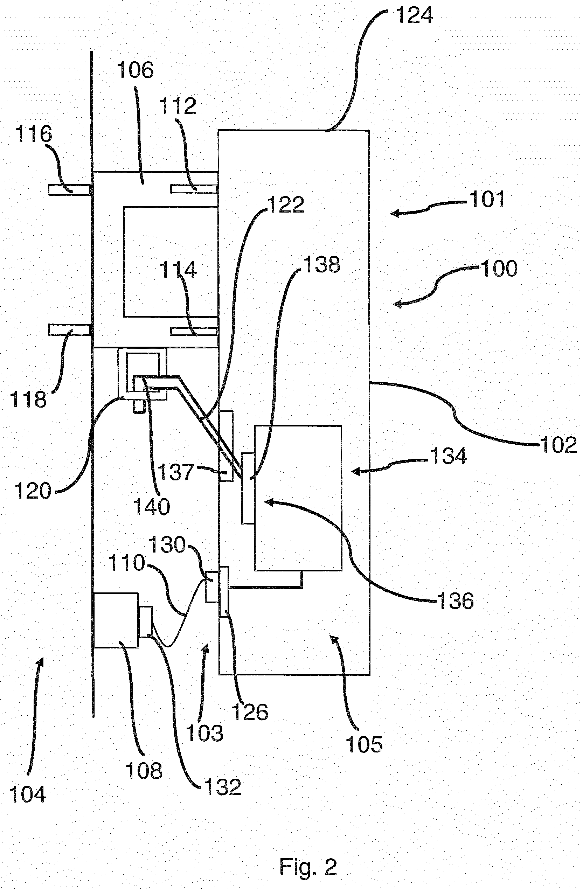

Figure 2 is a side view of the display device 100. The display device 100 is attached to wall 104 via mount 106. One or more attachment features are provided for attaching the display device 100 to the mount 106. In this example attachment features 112 and 114 are shown. The attachment features 112 and 114 could be one or more of or any combination of: one or more bolts; one or more screws; an adhesive; a slot and projection arrangement etc. Likewise one or more attachment features are provided for attaching the mount 106 to the wall 104 (which are not required in examples where the mount comprises a free-standing stand or the like). In this example attachment features 116 and 118 are shown. Again, the attachment features 116 and 118 could be one or more of or any combination of: one or more bolts; one or more screws; an adhesive; a slot and projection arrangement etc.

In this example the mount 106 is substantially C-shaped in side-view. Of course this is by way of example and the mount 106 may be differently shaped, so long as it is suitable for mounting display device 100. In this example the mount 106 comprises an attachment feature 120 for receiving a connector 122 for connecting the mount 106 to a circuit breaker arrangement 136 of the display device 100, as will be explained in more detail below. The attachment feature 120 may comprise a hook or ring or the like, or indeed any surface or profile suitable for attachment to connector 122.

The display device 100 comprises a main body portion or housing 124. The housing contains or surrounds internal components of the display device 100. For example the housing 124 may house one or more items of electrical componentry of the display device 100. The display device 100 comprises a first or front side 101 and a second or reverse or back side 103. A side portion 105 connects the front side 101 to the reverse side 103. The display 102 is comprised in the front side 101 of the display device 100.

The display device 100 comprises a socket 126 for enabling connection of the power lead 110 to the display device 100. The power lead 110 comprises a first plug end 130 for connection to socket 126, and a second plug end 132 for connection to mains electrical socket 108. In the example of Figure 2 the socket 126 is comprised in reverse side 103 of the display device 100, though in other examples the power socket 126 could be comprised on side portion 105 or front side 101.

The power socket 126 is electrically connected to a power circuit 134 of the display device 100. Although visible in Figure 2 to aid explanation, in general the power circuit 134 will be housed in housing 124 and not visible to a user in general use. The power circuit 134 comprises a circuit breaker arrangement shown schematically at 136. The circuit breaker arrangement 136 is constructed and arranged for connection to mount 106 on which the display device 100 is mounted.

In the example of Figure 2 the connection between mount 106 and circuit breaker arrangement 136 is provided by connector 122. The connector 122 has a first end 138 for connection to circuit breaker arrangement 136 and a second end 140 for attachment to attachment portion 120 of mount 106. In some examples the second end 140 of connector 122 is shaped or profiled so as to form a suitable connection to attachment portion 120 of mount 106. For example the second end 140 may be in the form of a hook, ring, clip or the like.

The first end 138 of connector 122 is constructed and arranged to connect to circuit breaker arrangement 136. For example first end 138 may connect to circuit breaker arrangement 136 via a suitable socket or interface 137 of the display device 100. The interface 137 may be on the back side 103 of the display device 100. The interface 137 is spaced from power socket 126. In some examples the first end 138 of connector 122 is arranged to connect directly to circuit breaker arrangement 136. In such examples, when connected to the circuit breaker arrangement 136 the first end 138 forms part of the power circuit 134. In such examples the first end 138 may comprise a suitable conductive portion. In other examples the first end 138 of connector 122 may connect indirectly to circuit breaker arrangement 136. For example, the first end 138 may interact with a switch of the circuit breaker arrangement 136.

In whichever manner the connector 122 interacts or connects with circuit breaker arrangement 136 (e.g. directly or indirectly) it may be considered that the circuit breaker arrangement 136 has a first configuration and a second configuration. In the first configuration the power circuit 134 is complete or unbroken and electrical power can flow through the power circuit 134. In the second configuration the power circuit 134 is incomplete or broken so that electrical power cannot flow through the power circuit 134 (or at least cannot flow properly through the power circuit).

The connector 122 is constructed and arranged so as to cause the circuit breaker arrangement 136 to be in the first configuration when the display device 100 is securely or properly mounted in mount 106, or the second configuration when the display device becomes detached (fully or partially) from mount 106. In an example, where the first end 138 of connector 122 is fully or properly connected to circuit breaker arrangement 136 then the circuit breaker arrangement is configured in its first configuration. When the first end 138 of connector 122 is disconnected from circuit breaker arrangement 136 or is improperly connected to circuit breaker arrangement 136, then the circuit breaker arrangement is caused to be in its second configuration.

In some examples the circuit breaker arrangement 136 is biased to be in the second configuration. Insertion of the first end 138 of the connector 122 to the device 100 (e.g. in to socket 137) may cause the bias of the circuit breaker arrangement 136 to be overcome, so as to place the circuit breaker arrangement 136 in the first configuration. For example a switch of the circuit breaker arrangement 136 may be biased in an open position, rendering the power circuit 134 incomplete. Insertion of the first end 138 of the connector may overcome this bias and close the switch so as to place the circuit breaker arrangement in to the first configuration. In the example of Figure 2 the circuit breaker arrangement 136 is in its first configuration and the power circuit 134 is complete.

In some examples the connector 122 is flexible. This may make it easier for a user to connect the connector 122 to the display device 100 and/or the mount 106. In some examples the connector 122 is inextendible or substantially inextendible. In some examples the connector 122 has a limited degree of elasticity. This ensures that if the display device 100 becomes detached from the mount 106 that the connector 122 doesn't simply stretch with the falling device (since this may prevent the circuit breaker from being activated).

The arrangement or system shown in Figure 2 may be constructed and arranged such that the connection between the first end 138 of the connector and the circuit breaker arrangement 136 (e.g. connection in socket 137) is weaker than a connection between the second end 140 of the connector and the attachment portion 120 of the mount 106. For example the first end 138 of the connector 122 may be a push or friction fit in the circuit breaker arrangement 136 (and/or socket 137). The second end 140 may have a stronger connection to the mount 106, such as by means of a clip or clasp or hook connection with attachment portion 120. The second end 140 may also be attached to attachment portion 120 in a permanent or semi-permanent manner e.g. by adhesive, welding, a knot etc. Thus if the display device 100 falls from mount 106, the connector 122 will disconnect from circuit breaker arrangement 136 before (or without) the connector 122 disconnecting from mount 106.

According to some examples the connector 122 is formed from an insulating material. Where the first end 138 of the connector 122 forms part of the circuit breaker arrangement 136, in some examples the first end 138 may comprise a conductive portion for forming part of the circuit breaker arrangement 136, with the remainder of the connector 122 being formed from an insulating material.

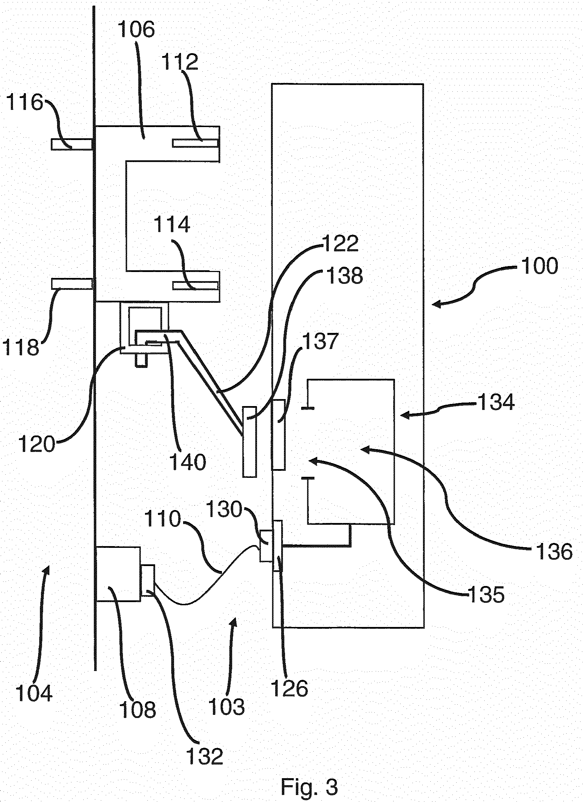

Figure 3 shows an example where the display device 100 has become detached from the mount 106. In Figure 3 the display device 100 is shown as completely detached from mount 106 (i.e. no longer in contact), though it will be understood that a partial detachment could occur which may still be classed as a detachment. Partial detachment may include, for example, detachment from one attachment feature 112 whilst remaining attached to another attachment feature 114, or movement within the mount 106 (e.g. slipping from one or more attachment feature 112 and 114). In the example of Figure 3 the mount 106 has itself remained properly attached to the wall 104. That is in this example the attachment features 116 and 118 have remained intact.

Whether the detachment of Figure 3 constitutes a full detachment or a partial detachment it will be noted that the connector 122 has disconnected from circuit breaker arrangement 136. More particularly, first end 138 of connector 122 has disconnected from its connection with circuit breaker arrangement 136, while second end 140 of connector 122 has remained connected to attachment portion 120 of mount 106. This has broken or cut power circuit 134, as schematically shown by break 135 in power circuit 134. Thus despite the power lead 110 remaining attached to mains 108 and socket 126 of display device 100, electrical power will not flow through the power circuit 134 of the display device 100. As discussed previously this may prevent arcing and/or power leakage.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A display device comprising:
a mains power connection;
a power circuit comprising a circuit breaker arrangement, the circuit breaker arrangement constructed and arranged for connection to a mount for holding the display device.

2. A display device according to claim 1, comprising an interface constructed and arranged to receive a connector for connecting the circuit breaker arrangement to the mount.

3. A display device according to claim 2, the circuit breaker arrangement constructed and arranged so that the connector forms a part of the power circuit.

4. A display device according to claim 2, the circuit breaker arrangement comprising a switch biased to an open position, wherein receiving the connector moves the switch to a closed position so as to complete the power circuit.

5. A display device according to any of claims 2 to 4, the interface being spaced from the mains power connection.

6. A display device according to any of claims 1 to 5, comprising a television.

7. In combination:
a display device;
a mount on which the display device is mounted;
the display device comprising a mains power connection and a power circuit comprising a circuit breaker arrangement, the circuit breaker arrangement connected to the mount by a connector.

8. The combination according to claim 7, the display device comprising an interface constructed and arranged to receive the connector, the interface being spaced from the mains power connection.

9. The combination according to claim 8, constructed and arranged so that a force required to disconnect the connector from the interface is less than a force required to disconnect the connector from the mount.

10. The combination according to any of claims 7 to 9, the circuit breaker arrangement constructed and arranged so that the connector forms a part of the power circuit.

11. The combination according to claim 8 or claim 9, the circuit breaker arrangement comprising a switch biased to an open position, wherein receiving the connector in the interface moves the switch to a closed position so as to complete the power circuit.

12. The combination of any of claims 7 to 11, the connector being flexible.

13. The combination of any of claims 7 to 12, the connector being inextendible.

14. The combination of any of claims 7 to 13, the mount comprising an attachment feature for attaching to the connector, the attachment feature comprising a hook or a ring.

15. The combination of any of claims 7 to 14, the mount comprising a wall mount or a stand.
